(19) Europäisches Patentamt
European Patent Office
Office européen des brevets

(11) Veröffentlichungsnummer : **0 374 626 B1**

(12) # EUROPÄISCHE PATENTSCHRIFT

(45) Veröffentlichungstag der Patentschrift :
**01.03.95 Patentblatt 95/09**

(51) Int. Cl.[6] : **G02B 1/08,** B32B 27/40, C08G 18/34, C08F 4/70, C08F 283/02

(21) Anmeldenummer : **89122658.1**

(22) Anmeldetag : **08.12.89**

(54) **Laminierte Polarisatoren.**

(30) Priorität : **21.12.88 DE 3842968**

(43) Veröffentlichungstag der Anmeldung :
**27.06.90 Patentblatt 90/26**

(45) Bekanntmachung des Hinweises auf die Patenterteilung :
**01.03.95 Patentblatt 95/09**

(84) Benannte Vertragsstaaten :
**BE CH DE FR GB IT LI NL SE**

(56) Entgegenhaltungen :
**EP-A- 0 210 498**
**EP-A- 0 249 019**
**DE-A- 3 334 181**
**DE-A- 3 403 493**
**DE-A- 3 617 502**

(73) Patentinhaber : **BAYER AG**
**D-51368 Leverkusen (DE)**

(72) Erfinder : **Ostoja-Starzewski, Karl Heinz Aleksander, Dr.**
**Jeschkenweg 10**
**D-6368 Bad Vilbel (DE)**
Erfinder : **Müller, Hanns Peter, Dr.**
**Weizenfeld 36**
**D-5060 Bergisch Gladbach 2 (DE)**
Erfinder : **Hassel, Tillmann, Dr.**
**Morgengraben 14**
**D-5000 Köln 80 (DE)**

**EP 0 374 626 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft laminierte Polarisatoren, die eine polarisierende Kernschicht aus einem polyacetylen-(PAC)-haltigen Polymer und ein- oder beidseitige Adhäsionsschichten aus einem speziellen Polyurethan-Polyharnstoff umfassen, die je eine transparente Deckschicht aufnehmen können.

Die Herstellung von Laminaten aus verschiedenen Substraten mit dazwischen befindlichen Adhäsions-(Kleb-)Schichten ist bekannt. Aus BE 617 286 ist ein Laminat aus einem optischen Element und Glas unter Verwendung eines vernetzten Epoxidharzes als Adhäsionsschicht bekannt. Zur Vernetzung ist eine 48-stündige Reaktion bei 95°C erforderlich. Weitere bekannte Adhäsionsschichten sind beispielsweise: mit Aminen, Säureanhydriden oder Polyamiden aushärtende Epoxidharze (DE-OS 15 94 044; US 4 416 946); Acrylatsysteme, die monomere und oligomere Systeme mit Vinylgruppen sein können, die nach dem Aufbringen der Deckschicht thermisch, radikalisch oder photochemisch gehärtet werden können [JP 56/33 610 (1981), JP 59/58 410 (1984), JP 59/48 714 (1984), JP 58/171 008 (1983)]; Mischungen von Polyacrylaten mit Phenolharzen, die in Lösung aufgebracht werden [JP 55/155 307 (1980)]; Isocyanatklebstoffe [JP 53/47 696 (1978)] und Polyurethane [JP 60/159 704 (1985)].

Während bei vielen Laminaten mechanische Werte wie Festigkeit, Energieaufnahmevermögen (Sicherheitsgläser) und allgemein eine ausreichende Haftung der Laminatbestandteile im Vordergrund steht, kommen bei den erfindungsgemäßen laminierten hochwirksamen Polarisatoren weitere Forderungen hinzu, nämlich

1) eine hohe Lichtdurchlässigkeit, wobei sämtliche Trübungserscheinungen ausgeschlossen werden müssen,

2) ein hohes Maß an Lichtechtheit

3) Schutz der polarisierenden Kernschicht vor chemischen Umwelteinflüssen und

4) Verträglichkeit der Adhäsionsschichten und gegebenenfalls der Deckschichten mit der polarisierenden Kernschicht ohne Beeinträchtigung der optischen Eigenschaften.

Grundsätzlich ist es möglich, die oben genannten Adhäsionsschichten auch für die Laminierung von polyacetylenhaltigen Polymeren, deren Matrix ein Polymer mit polaren Gruppen ist, einzusetzen. In vorteilhafter Weise eignen sich hierfür jedoch die unten näher beschriebenen Polyurethan-Polyharnstoffe.

Die Erfindung ist durch die Merkmale vom Anspruch 1 definiert.

Es wurden laminierte Polarisatoren aus einer polarisierenden Kernschicht und ein- oder beidseitigen Adhäsionsschichten, die je eine transparente Deckschicht aufnehmen können, gefunden, wobei der Polarisator ein polyacetylenhaltiges Polymerprodukt ist, dessen Matrix ein Polymer mit polaren Gruppen ist. In Frage kommende Adhäsionsschichten müssen transparent sein und sind dem Fachmann grundsätzlich bekannt. Genannt seien beispielsweise Epoxidharze und Acrylpolymere. In besonderer Weise werden als Adhäsionsschichten thermoplastische Polyurethan-Polyharnstoffe einer überwiegend linearen Molekularstruktur mit ausschließlich aliphatisch oder cycloaliphatisch gebundenen Urethan- und Harnstoff-Segmenten eingesetzt, die sich durch

a) einen Gehalt an Harnstoffgruppen -NH-CO-NH- von 1-20 Gew.-% und

b) einen Gehalt an seitenständigen, unmittelbar mit der Hauptkette des Moleküls verbundenen Carboxylgruppen -COOH van 0,001-10 Gew.-%, alles bezogen auf das Gesamtgewicht der Polyurethan-Polyharnstoffe, auszeichnen.

Die genannten Polyurethan-Polyharnstoffe sind hochlichtechte und hochtransparente Adhäsionsmaterialien. Sie vermitteln weiterhin eine ausgezeichnete Haftung zwischen den genannten Deckschichten und der polarisierenden Kernschicht. Darüber hinaus vermitteln sie im Gesamtlaminat eine hohe Kantenstabilität, wie aus dem Kochtest von unter Verwendung dieses Adhäsionsmittels hergestellten Gesamtlaminaten hervorgeht; dieser Kochtest zeigt gleichzeitig die hohe Sperrwirkung (Barrierwirkung) gegen Wasser. Diese hohe Kantenstabilität und die Sperrwirkung gegen Wasser sind außerordentlich wichtig, um ein Vordringen von Wasser zur polarisierenden Kernschicht wirksam zu verhindern, da die polare Gruppen enthaltende Matrix der polarisierenden Kernschicht in vielen Fällen empfindlich gegen Wasser ist. Solche thermoplastische Polyurethan- Polyharnstoffe sind bekannt aus DE-OS 26 44 434 und den dazu äquivalenten US 4 166 149, US 4 174 240 und US 4 254 176.

Die als Adhäsionsschichten einzusetzenden Polyurethan-Polyharnstoffe, können beispielsweise durch Aufgießen einer Lösung dieses Adhäsionsmaterials auf die polarisierende Kernschicht und Abdampfen des Lösungsmittels aufgebracht werden. Die so auf einer oder beiden Seiten mit Adhäsionsschichten versehene polarisierende Kernschicht kann dann mit den Deckschichten verbunden werden. Ebenso kann für den Fall von einzusetzenden Deckschichten auch umgekehrt verfahren werden und zunächst Adhäsionsmaterial auf die Deckschicht(en) aufgebracht werden, woraufhin wiederum ein Zusammenfügen der mit Adhäsionsschichten versehenen Deckschichten mit der polarisierenden Kernschicht vorgenommen wird. Noch weitere Herstellungsmethoden bestehen beispielsweise in einer Coextrusion der drei Schichten in einer dem Fachmann

grundsätzlich bekannten Weise.

Die erfindungsgemäß für die Herstellung der Adhäsionsschichten eingesetzten Polyurethan-Polyharnstoffe sind insbesondere als Schmelzkleber wirksam, verbinden also die Kernschicht mit den Deckschichten unter der Einwirkung von höherer Temperatur und Druck, beispielsweise bei 100 -200°C und bei 5 - 50 bar. Neben der Druckverklebung unter erhöhter Temperatur ist auch ein Anquellen der Adhäsionsschichten mit einem geeigneten Lösungsmittel, beispielsweise Methylenchlorid oder Tetrahydrofuran, möglich, wobei nach Anlegen der weiteren Schichten des Laminats, ebenfalls unter Druck aber ohne Anwendung erhöhter Temperatur, der Verbund erzeugt wird.

Adhäsionsschichten aus den erfindungsgemäß eingesetzten Polyurethan-Polyharnstoffen sind unter Normalbedingungen klebfrei. Daher bestehen die erfindungsgemäßen laminierten Polarisatoren aus der polarisierenden Kernschicht und den beidseitigen Adhäsionsschichten; die Adhäsionsschichten können Deckschichten tragen.

Damit wird es möglich, auf die polarisierende Kernschicht zunächst nur beidseitig Adhäsionsschichten aus solchen Polyurethan-Polyharnstoffen aufzubringen und statt unmittelbar, etwa in hintereinanderliegenden Produktionsschritten, Deckschichten aufzutragen, diese erst in einem zeitlich davon (durch Zwischenlagerung und/oder Transport) stärker getrennten Arbeitsgang die beiden Deckschichten, beispielsweise unter der Einwirkung von höherer Temperatur und Druck, aufzubringen.

Dies kann beträchtliche Vorteile beim Versand mit sich bringen, beispielsweise durch Gewichtseinsparung oder durch Vermeidung von Transportschäden, wenn beispielsweise die Deckschichten aus Glas bestehen sollen.

Solche laminierten Polarisatoren können beispielsweise durch Kaschieren mit einer schlecht haftenden, abziehbaren Deckfolie, beispielsweise aus Polyethylen oder siliconisiertem Papier, gegen Verschmutzung und Schäden geschützt werden.

Die Herstellung der erfindungsgemäß einzusetzenden Polyurethan-Polyharnstoffe erfolgt beispielsweise nach dem Prepolymer-Prinzip, d.h., durch Umsetzung einer überschüssigen Menge eines geeigneten Diisocyanats mit Dihydroxylverbindungen zu den entsprechenden, endständige Isocyanatgruppen aufweisenden Prepolymeren und anschließender Kettenverlängerung dieser Prepolymeren mit Diamin-Kettenverlängerungsmitteln. Dabei können gegebenenfalls zwecks Regulierung des Molekulargewichtes und damit zwecks Einstellung der physikalischen Eigenschaften des Polymeren monofunktionelle Reaktionspartner als Kettenabbrecher in geringen Mengen mitverwendet werden. Im allgemeinen werden Art und Mengenverhältnisse der Aufbaukomponenten so gewählt, daß sich ein rechnerisches Molekulargewicht zwischen 10.000 und 500.000, vorzugsweise 20.000 und 200.000, ergibt. Die difunktionellen Aufbaukomponenten werden bei der Herstellung erfindungsgemäß einzusetzender Polyurethan-Polyharnstoffe im allgemeinen in solchen Mengen eingesetzt, daß pro Hydroxylgruppe der alkoholischen Aufbaukomponente 1,1 bis 4, vorzugsweise 1,2 bis 3, Isocyanatgruppen und 0,1 bis 3, vorzugsweise 0,2 bis 2, Aminogruppen des Kettenverlängerungsmittels zum Einsatz gelangen.

Zur Herstellung geeignete Diisocyanate sind solche mit aliphatisch und/oder cycloaliphatisch gebundenen Isocyanatgruppen der Formel $Q(NCO)_2$, worin Q für einen aliphatischen Kohlenwasserstoffrest mit 2 bis 12 C-Atomen oder einen cycloaliphatischen bzw. gemischt aliphatisch-cycloaliphatischen Kohlenwasserstoffrest mit 4 bis 15 C-Atomen steht. Beispiele derartiger Diisocyanate sind Ethylendiisocyanat, Tetramethylendiisocyanat, Hexamethylendiisocyanat, Dodecamethylendiisocyanat, Cyclobutan-1,3-diisocyanat, Cyclohexan-1,3- und 1,4-diisocyanat, 4,4'-Diisocyanato-dicyclohexylmethan oder 1-Isocyanato-3,3,5-trimethyl-5-isocyanatomethyl-cyclohexan (Isophorondiisocyanat) bzw. beliebige Gemische derartiger Diisocyanate. Vorzugsweise werden cycloaliphatische bzw. gemischt aliphatisch-cycloaliphatische Diisocyanate, besonders bevorzugt Isophorondiisocyanat, eingesetzt.

Bei der alkoholischen Aufbaukomponente handelt es sich um

i) die aus der Polyurethanchemie an sich bekannten höhermolekularen Diole des Molekulargewichtsbereiches 300 bis 6.000, vorzugsweise 800 bis 3.000,

ii) Dihydroxycarbonsäuren der Formel

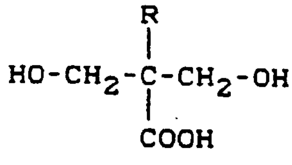
,

in welcher

R für Wasserstoff oder einen $C_1$-$C_4$-Alkylrest steht und gegebenenfalls

iii) niedermolekulare aliphatische oder cycloaliphatische Diole, vorzugsweise des Molekulargewichtsbereichs 62 bis 300.

Die Mengenverhältnisse der einzelnen Komponenten i), ii) und iii), die gleichzeitig oder sukzessive mit der Isocyanatkomponente umgesetzt werden können, werden dabei vorzugsweise so gewählt, daß pro Hydroxylgruppe der Komponente i) 0,01 bis 12 Hydroxylgruppen der Komponente ii) und 0 bis 10 Hydroxylgruppen der Komponente iii) vorliegen. Bei der Komponente i) handelt es sich um die an sich bekannten Polyester-, Polyether-, Polythioether-, Polyacetal- oder Polyesteramid-Diole. Vorzugsweise werden die an sich bekannten Polyester- oder Polyether-Diole der Polyurethanchemie eingesetzt. Ihre Herstellung und Zusammensetzung ist dem Fachmann bekannt.

Bei der Komponente ii) der genannten Formel handelt es sich beispielsweise um Dimethylol-Essigsäure, $\alpha,\alpha$-Dimethylol-Propionsäure oder $\alpha,\alpha$-Dimethylol-n-Valeriansäure. $\alpha,\alpha$-Dimethylol-Propionsäure ist bevorzugt. Auch bei der Komponente iii) handelt es sich um Glykole der dem Fachmann bekannten Art.

Geeignete Diamin-Kettenverlängerungsmittel sind vorzugsweise primäre Aminogruppen aufweisende aliphatische, cycloaliphatische oder gemischt aliphatisch-cycloaliphatische Diamine des Molekulargewichtsbereichs 60 bis 300.

Beispiele hierfür sind: Ethylendiamin, Tetramethylendiamin, Hexamethylendiamin, 4,4′-Diamino-dicyclohexylmethan, 1,4-Diaminocyclohexan, 4,4′-Diamino-3,3′-dimethyl-dicyclohexylmethan oder 1-Amino-3,3,5-trimethyl-5-aminomethyl-cyclohexan (Isophorondiamin). Bevorzugt werden 4,4′-Diamino-dicyclohexylmethan oder Isophorondiamin eingesetzt.

Monofunktionelle Reaktionspartner zur Einstellung des gewünschten Molekulargewichts (Kettenabbrecher) werden im allgemeinen in Mengen von 0,05 bis 3, bevorzugt 0,1 bis 1 Gew.-%, bezogen auf die Gesamtmenge der Aufbaukomponente, mitverwendet. Beispielhaft seien als monofunktionelle Reaktionspartner genannt: Monoisocyanate, wie Methylisocyanat; Monoalkohole, wie Methanol, Ethanol, Butanol, tert.-Butanol, Octanol, Isopropanol, Cyclohexanol; Monoamine, wie Methylamin, Butylamin, Dibutylamin.

Die Herstellung dieser bevorzugt als Adhäsionsschichten in den erfindungsgemäßen laminierten Polarisatoren einzusetzenden Polyurethan-Polyharnstoffe geschieht in der Prepolymerstufe im allgemeinen bei etwa 80 bis 150° C. Der Endpunkt der Reaktion wird durch NCO-Titration ermittelt. Nach der Prepolymerbildung erfolgt dann die Kettenverlängerungsreaktion mit dem Diamin-Kettenverlängerungsmittel entweder in der Schmelze oder in Lösung, wobei die hierfür geeigneten Lösungsmittel dem Fachmann bekannt sind. Die Kettenverlängerungsreaktion kann besonders vorteilhaft in beheizten Reaktionsschneckenmaschinen durchgeführt werden. Zur Kettenverlängerungsreaktion wird eine Temperatur von 120 bis 300°C, bevorzugt 150 bis 250°C, eingestellt.

Die Adhäsionsschichten in den erfindungsgemäßen laminierten Polarisatoren haben eine Schichtdicke von beispielsweise 0,5 - 50 µm, bevorzugt 0,5 - 20 µm. Für den Fall der Herstellung solcher Adhäsionsschichten durch Gießtechnik ist ein mehrfaches Gießen zum Erhalt dickerer Schichten möglich. Die Deckschichten haben Dicken von 5 µm bis 1 mm, bevorzugt 5 - 100 µm. Die polarisierende Kernschicht hat eine Dicke von 1 - 100 µm, bevorzugt 5 - 50 µm. Für den Fall, daß als Deckschicht optische Linsen und/oder Prismen in Frage kommen, können solche Deckschichten auch dicker sein.

Als Deckschichten kommen beispielsweise aromatische Polyester, Polyacrylnitrile, Poly(meth)acrylate, Polysulfone, aromatische Polycarbonate, Celluloseacetate, Celluloseacetobutyrate, Polyamide, Polyhydantoine, Polyimide, Polyamidimide, Polyparaphenylenbenzo-bis-imidazole und -oxazole, Polyetherketone und mineralische Gläser in Frage, wobei besonders die Polyester, Poly(meth)acrylate, Polycarbonate, Celluloseester und mineralische Gläser zu nennen sind Die Transparenz dieser Materialien ist ihr wichtigstes Merkmal. Sie werden im allgemeinen als dünne Platten oder als Folien eingesetzt.

Die polarisierende Kernschicht ist ein Polarisator aus polyacetylen-(PAC)-haltigen Polymerprodukten, deren Matrix ein Polymer mit polaren Gruppen ist, und die einen maximalen Polarisationsgrad P von mindestens 90 %, bevorzugt mindestens 95 %, besonders bevorzugt mindestens 98 %, und ein maximales dichroitisches Verhältnis $Q_E$ von 5 oder größer, vorzugsweise 10 oder größer haben, beides bezogen auf den Bereich des sichtbaren Lichts. Diese Polarisatoren werden als Folien eingesetzt, an denen durch Verstrecken eine Vorzugsrichtung erzeugt wurde. Der Verstreckungsgrad $\varepsilon$ beträgt hierbei mehr als 200 %, bevorzugt mindestens 500 %, besonders bevorzugt mindestens 600 %.

Der Polarisationsgrad P, das dichroitische Verhältnis $Q_E$ und der Verstreckungsgrad $\varepsilon$ sind wie folgt definiert:

$$P = \frac{\text{Transmission in Durchlaßstellung minus Transmission in Sperrstellung}}{\text{Transmission in Durchlaßstellung plus Transmission in Sperrstellung}} \cdot 100$$

$$Q_E = \frac{\text{Extinktion in Sperrstellung}}{\text{Extinktion in Durchlaßstellung}}$$

(beide Größen gelten für linear polarisiertes Licht)

$$\varepsilon = \frac{l - l_o}{l_o} \cdot 100$$

($l$ = Länge nach dem Verstrecken; $l_o$ = Länge vor dem Verstrecken)

Solche erfindungsgemäß einsetzbaren Polarisatoren sind beispielsweise herstellbar durch Polymerisation von Acetylen in der Lösung eines Polymeren mit polaren Gruppen in Gegenwart eines Nickel-Katalysators, der erhalten wird durch Umsetzung einer Nickel-(0)-Verbindung oder einer Verbindung, die in situ in eine Nickel-(0)-Verbindung übergeführt werden kann, mit Phosphorverbindungen, wie sie aus EP 0 249 019 A 1 bekannt sind, bevorzugt mit Phosphorverbindungen der Formeln

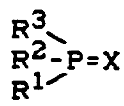 (I) und 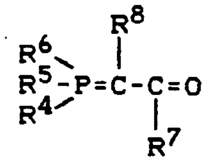 (II),

worin

$R^1$, $R^2$ und $R^3$ unabhängig voneinander geradkettiges oder verzweigtes $C_1$-$C_{20}$-Alkyl, $C_1$-$C_{20}$-Alkoxy, $C_3$-$C_8$-Cycloalkyl, $C_2$-$C_6$-Alkenyl, $C_6$-$C_{12}$-Aryl, $C_6$-$C_{12}$-Aryloxy, $C_7$-$C_{15}$-Aralkyl oder Di($C_1$-$C_4$-alkyl)-amino,

$R^4$, $R^5$, $R^6$, $R^7$ und $R^8$ unabhängig voneinander geradkettiges oder verzweigtes $C_1$-$C_{20}$-Alkyl, $C_2$-$C_{30}$-Alkenyl, $C_1$-$C_{20}$-Alkoxy, $C_3$-$C_8$-Cycloalkyl, $C_6$-$C_{12}$-Aryl, $C_6$-$C_{12}$-Aryloxy oder $C_7$-$C_{15}$-Aralkyl bedeuten, wobei

$R^7$ zusätzlich Wasserstoff und

$R^8$ zusätzlich Wasserstoff und Acyl bedeuten können und

X doppelt gebundenen Sauerstoff, die Gruppe $NR^9$ oder die Gruppe

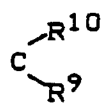

bedeutet, wobei

$R^9$ und $R^{10}$ unabhängig voneinander Wasserstoff, Silyl, Acyl, Phenyl, Cyano oder $R^1$ bedeuten.

In bevorzugter Weise werden Phosphorverbindungen der Formeln (I) und (II) eingesetzt, in denen X die Bedeutung = $CR^9R^{10}$ hat und $R^4$ für $C_6$-$C_{12}$-Aryl steht.

In besonders bevorzugter Weise wird die Acetylen-Polymerisation in Gegenwart einer Nickelverbindung durchgeführt, die herstellbar ist durch Umsetzung einer Nickel-(0)-Verbindung oder einer Verbindung, die in situ in eine Nickel-(0)-Verbindung übergeführt werden kann, mit Verbindungen der Formeln

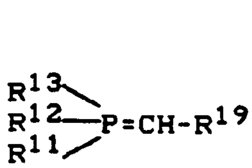 (III) und 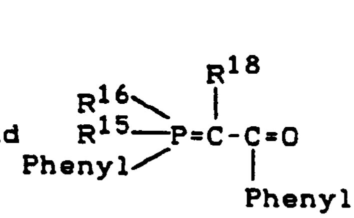 (IV),

worin

$R^{11}$, $R^{12}$ und $R^{13}$ unabhängig voneinander $C_1$-$C_8$-Alkyl, Phenyl oder Benzyl bedeuten,

$R^{15}$, $R^{16}$ und $R^{18}$ unabhängig voneinander $C_1$-$C_8$-Alkyl und Phenyl bedeuten, wobei

$R^{18}$ zusätzlich Wasserstoff oder Acyl bedeuten kann, und

$R^{19}$ für Wasserstoff, $C_1$-$C_8$-Alkyl oder Phenyl steht.

Ganz besonders bevorzugt sind die Phosphorverbindungen solche der Formeln

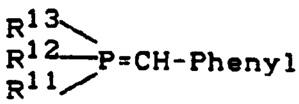 (V) und 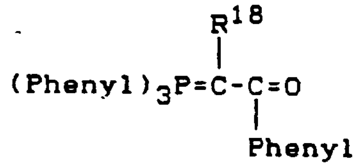 (VI),

in denen

$R^{11}$, $R^{12}$, $R^{13}$ und $R^{18}$ die oben genannte Bedeutung haben.

Zur Herstellung des Katalysators werden pro Mol Nickel-(0)-Verbindung 1-4 Mol der Verbindung der Formel (I) bzw. (III) bzw. (V) und 1-4 Mol der Verbindung der Formel (II) bzw. (IV) bzw. (VI), bevorzugt pro Mol der Nickel-(0)-Verbindung etwa 1 Mol der Verbindung der Formel (I) bzw. (III) bzw. (V) und etwa 1 Mol der Verbindung der Formel (II) bzw. (IV) bzw. (VI) eingesetzt.

Die Temperatur zur Herstellung des Katalysators beträgt 0 bis 100° C, bevorzugt 20 bis 70° C. Bei der Herstellung wird unter Ausschluß van Sauerstoff, vorzugsweise in einem Lösungsmittel, das gegenüber den Reaktanden inert sein muß, wie Benzol, Toluol, Cyclohexan oder n-Hexan, gearbeitet. Nach seiner Herstellung wird der Katalysator als Feststoff gewöhnlich durch Filtrieren isoliert, wobei man nach Bedarf die Lösung zuvor einengt und/oder abkühlt. Der Katalysator kann jedoch auch ohne Isolierung, d.h. als Lösung, direkt zur Polymerisation von Acetylen eingesetzt werden.

Als Nickel-(0)-Verbindungen seien beispielhaft Ni(cyclooctadien)$_2$ und Ni(allyl)$_2$ genannt. Als Nickelverbindungen, die in situ in Nickel-(0)-Verbindungen übergeführt werden können, seien beispielsweise genannt: Ni-acetylacetonat, Ni-octanoat und Ni-stearat, die mit Hilfe von üblichen Reduktionsmitteln, wie Boranat, Alanat, Aluminiumalkylen oder Lithiumorganylen, reduziert werden können.

Als geradkettiges oder verzweigtes $C_1$-$C_{20}$-Alkyl seien beispielsweise genannt: Methyl, Ethyl, Propyl, Isopropyl, Butyl, Isobutyl, tert.-Butyl, die isomeren Amyle, Hexyle, Octyle, Decyle, Dodecyle, Eicosyle. Bevorzugtes Alkyl hat 1-8 C-Atome.

Als geradkettiges oder verzweigtes $C_1$-$C_{20}$-Alkoxy seien beispielsweise genannt: Methoxy, Ethoxy, Propoxy, Isopropoxy, Butoxy, Isobutoxy, tert.-Butoxy, die isomeren Amyloxy, Hexyloxy, Octyloxy, Decyloxy, Dodecyloxy, Eicosyloxy. Bevorzugtes Alkoxy hat 1-8 C-Atome.

Als $C_3$-$C_8$-Cycloalkyl seien beispielsweise genannt: Cyclopropyl, Cyclobutyl, Cyclopentyl, Cyclohexyl, Methyl-cyclopentyl, Methyl-cyclohexyl, Cycloheptyl, Cyclooctyl.

Als $C_6$-$C_{12}$-Aryl seien beispielsweise genannt: Phenyl, Naphthyl, Biphenylyl. Bevorzugtes Aryl ist Phenyl.

Als $C_2$-$C_6$-Alkenyl seien beispielsweise genannt: Vinyl, Propenyl, Allyl, Butenyl, Pentenyl, Hexenyl sowie deren verzweigte Isomere. Weiteres Alkenyl ist z.B. Octenyl, Decenyl, Eicosenyl oder Triacontenyl.

Als $C_6$-$C_{12}$-Aryloxy seien beispielsweise genannt: Phenoxy, Naphthyloxy, Biphenyloxy. Bevorzugt ist Phenoxy.

Als Di($C_1$-$C_4$-alkyl)-amino seien beispielsweise genannt: Dimethylamino, Diethylamino, Dipropylamino, Methylbutylamino, Ethyl-butyl-amino u.a.

Als Silyl sei beispielsweise Tri-$C_1$-$C_4$-alkyl-silyl, Triphenylsilyl oder gemischte trisubstituierte Alkylphenylsilyle, bevorzugt Tri-$C_1$-$C_4$-alkyl-silyle, wie Trimethylsilyl, Triethylsilyl und andere genannt.

Als Acyl sei $C_1$-$C_8$-Alkylcarbonyl oder $C_6$-$C_{12}$-Arylcarbonyl genannt, die in der unten genannten Weise substituiert sein können, wie Acetyl, Propionyl, Butyryl, $C_5$-Alkyl-carbonyl, $C_8$-Alkyl-carbonyl, Benzoyl, substituiertes Benzoyl oder Naphthyl-carbonyl. Bevorzugtes Acyl ist substituiertes oder nicht substituiertes $C_1$-$C_4$-Alkyl-carbonyl oder Benzoyl. Besonders bevorzugt sind Acetyl oder Benzoyl.

Die genannten Substituenten können ein- bis dreifach, bevorzugt ein- oder zweifach, besonders bevorzugt einfach, durch $C_1$-$C_4$-Alkoxy, durch Phenyl oder Phenoxy substituiert sein, wobei bei mehrfacher Substitution die Substituenten verschiedene aus der genannten Aufzählung sein können.

Die zur Acetylenpolymerisation eingesetzte Menge des Nickel-Katalysators ist nicht kritisch. Typische Katalysatorkonzentrationen liegen bei $10^{-1}$-$10^{-5}$, bevorzugt $10^{-2}$-$10^{-4}$ Mol Nickel-Katalysator pro Liter Polymerisationsansatz.

Die Polymerisation des Acetylens kann sowohl kontinuierlich als auch diskontinuierlich durchgeführt werden. Hierbei wird eine Temperatur von 20-120° C, bevorzugt 40-110°C, besonders bevorzugt 60 bis 100° C eingehalten.

Die Polymerisation kann bei Normaldruck durchgeführt werden, jedoch ist auch eine Polymerisation unter erhöhtem Druck, gegebenenfalls im Gemisch mit Schutzgas (wie $N_2$), beispielsweise bei 1,01 - 20 bar, möglich.

Das Acetylen kann ohne weitere Reinigung aus einer Druckflasche entnommen und verwendet werden. Bei acetonempfindlichen Katalysatoren kann es erforderlich sein, im Acetylen etwa enthaltenes Aceton zuvor

in einer Kühlfalle auszufrieren.

Die Acetylen-Polymerisation wird in einer Polymerlösung eines polare Gruppen tragenden Polymers durchgeführt. Polare Gruppen sind hierbei Halogenatome, Nitrilgruppen, Hydroxylgruppen, Estergruppen und ähnliche. Beispiele für solche geeigneten, polare Gruppen tragenden Polymere sind Polyvinylchlorid, Polyvinylalkohol (PVA) aus teilverseiftem Polyvinylacetat (PVAC) und andere, Vinylalkohol enthaltende (Co)-Polymere, Polyacrylnitril, Acrylnitril enthaltende Copolymere, Polyvinylpyrrolidon, Methylcellulose und andere Cellulose-Derivate, Polycarbonat u.a.; bevorzugt werden Lösungen von Polyvinylchlorid, Polyvinylalkohol (PVA) aus teilverseiftem PVAC und andere, Vinylalkohol enthaltende (Co)-Polymere, Polyacrylnitril, Acrylnitril enthaltende Copolymere sowie Polyvinylpyrrolidon eingesetzt.

Der besonders bevorzugt als Lösung einzusetzende Polyvinylalkohol aus teilverseiftem PVAC ist hierbei ein Polymer, das einen Verseifungsgrad von beispielsweise 70 - 90 %, bevorzugt 80-90 %, hat.

Diese polare Gruppen enthaltenden Polymere liegen in Form einer Lösung vor. Lösungsmittel hierfür sind beispielsweise Dimethylformamid (DMF), Dimethylsulfoxid (DMSO) u.a. Die Konzentration des Polymer im Lösungsmittel beträgt 1-20 Gew.-%, bevorzugt 2-10 Gew.-%.

Zur Herstellung der erfindungsgemäß einsetzbaren hochwirksamen Polarisatoren wird die Acetylen-Polymerisation in der Lösung eines Polymeren mit polaren Gruppen in Gegenwart des beschriebenen Nickel-Katalysators in einer Zeit von 5-1000 sec, bevorzugt 5-600 sec durchgeführt.

Die durch Kurzzeitpolymerisation (5-600 sec) und unter Einsatz der bevorzugten Katalysatoren erhaltenen Polarisatoren für die Kernschicht sind hoch wirksam. Sie haben einen noch höheren maximalen Polarisationsgrad als oben beschrieben, nämlich mindestens 95 %, bevorzugt mindestens 98 %, besonders bevorzugt mindestens 99 %.

Solche hoch wirksamen Polarisatoren haben ferner ein dichroitisches Verhältnis von $Q_E$ = 10 oder größer fast über den gesamten Wellenlängenbereich des sichtbaren Lichts, nämlich im Bereich von 400 - 800 nm. Dieses Verhältnis $Q_E$ gilt für eine bestimmte Wellenlänge und ist bei geeigneten dichroitischen Farbstoffen auf einen engen Wellenlängenbereich des sichtbaren Lichts beschränkt Dies ist an der Eigenfarbe der mit Hilfe von dichroitischen Farbstoffen hergestellten Polarisatoren erkennbar; die genannten Stoffe sind noch dazu schwierig in gleichmäßiger Form über eine größere Fläche einer damit einzufärbenden Folie zu verteilen.

Demgegenüber zeigen die soeben beschriebenen hoch wirksamen Polarisatoren einen hohen $Q_E$-Wert über nahezu den gesamten Bereich des sichtbaren Lichts und sind daher farbneutral, was durch ihre graue Eigenfarbe erkennbar ist.

Aus den polyacetylen-(PAC)-haltigen Polymerprodukten werden Folien hergestellt, was durch Vergießen aus den bei der Polymerisation anfallenden Lösungen erfolgen kann. Die Folien werden in der oben besprochenen Weise verstreckt.

Zum Vergießen kann die oben beschriebene Polymerisationslösung direkt verwendet werden; in einer dem Fachmann geläufigen Weise können aber auch Stabilisatoren und/oder Weichmacher vor der Verarbeitung zugesetzt werden. Solche Stabilisatoren (z. B. UV-Stabilisatoren) können jedoch zusätzlich oder alternativ in die Adhäsions- oder Deckschichten eingebracht werden. Das Einbringen der Stabilisatoren in die Adhäsions- oder Deckschichten ist bevorzugt.

Wenn die Matrix des polyacetylen-(PAC)-haltigen Polymerprodukts ein PVA ist, kann das polyacetylenhaltige Polymerprodukt auch aus der Polymerisationslösung ausgefällt und vom Lösungsmittel, beispielsweise Dimethylformamid, befreit werden. Es kann dann in Wasser aufgenommen werden und daraus vergossen werden. In diesem Fall ist der Zusatz eines Weichmachers zu dieser Polymerisatlösung empfehlenswert. Fällungsmittel sind beispielsweise Toluol, Cyclohexan, Aceton, Methanol, Ethanol und weitere, in denen PVA nicht löslich ist.

Die Laminierung verleiht dem Polarisator eine mechanische Stabilität und Schutz vor Quellung mit Lösungsmitteln oder Wasser. Des weiteren wird eine chemische Stabilität, etwa durch Schutz vor Atmosphärilien, erreicht. Die Handhabbarkeit durch ausreichende Stabilität und die Möglichkeit der oberflächlichen Reinigung ist bedeutend verbessert.

Der Ordnungsgrad einer verstreckten Kernschicht wird durch die Ausbildung des Laminats und durch den Zusatz von Weichmachern und/oder Stabilisatoren nicht gemindert. Dies gilt auch bei Laminierung durch Schmelzklebung.

Beispiel 1

Katalysatorherstellung

5 mmol Bis-cyclooctadien-nickel(O) in 100 ml trockenem stickstoffgesättigtem Toluol wurden unter Stickstoff mit 5 mmol Benzoyl-methylen-triphenylphosphoran und 5 mmol Methylen-trimethylphosphoran gemischt.

Unter intensivem Rühren erwärmte man ca. 1 Stunde auf 40 bis 60° C. Die dunkelgelb-braune Lösung wurde filtriert und im Vakuum zur Trockne eingeengt. Der gelbe Katalysator wurde in 25 ml trockenem stickstoffgesättigtem Dimethylformamid gelöst. Diese Lösung bzw. ein Teil derselben wurde bei der nachfolgenden Acetylenpolymerisation eingesetzt.

Beispiel 2

In einem 250 ml Reaktionskolben (Gaseinleitung, Tropftrichter ohne Druckausgleich mit $N_2$-Zuführung, Rührer, Innenthermometer, Rückflußkühler mit Blasenzähler) wurden unter Inertgas ($N_2$) 5 g Polyvinylalkohol (Verseifungsgrad 88 %) in 245 g trockenem DMF (entgast, $N_2$-gesättigt) bei 120° C gelöst und dann auf 80° C temperiert. Anschließend wurden 1,0 mmol des in Beispiel 1 beschriebenen Katalysators in 5,0 ml DMF unter $N_2$ eingerührt, und ein gleichmäßiger Strom von Acetylengas (Trockeneis/Aceton) wurde während 15 sec. eingeleitet. Die Reaktionslösung wurde anschließend durch ein Polyamid-Tuch von 200 µm Maschenweite filtriert.

Die klare blaue PVA-PAC Lösung (Absorptionsmaximum 633 nm) wurde heiß auf einer PET-Folie mit einem Rakel in einer Schicht von 400 µm ausgestrichen. Nach Abdampfen des Lösungsmittels erhielt man eine klare, blaue Folie, die von der Unterlage abgezogen und bei ca. 130° C auf 760 % verstreckt wurde.

Die optometrischen Daten des so entstandenen Polarisators waren bei Licht einer Wellenlänge von 600 nm:

| | |
|---|---|
| Dichroitisches Verhältnis $Q_E$ | : 21,4 |
| Polarisationsgrad P | : 99,4 % |

Die optometrischen Daten (auch die der folgenden Beispiele) wurden mittels eines Spektralphotometers Typ Uvikon 810 P der Fa. Kontron gemessen.

Beispiele 3-6

Analog Beispiel 1 und 2 wurden weitere polyacetylen-(PAC)-haltige Polarisatoren hergestellt. Ihre Eigenschaften sind in der folgenden Tabelle zusammengestellt.

| Beispiel | Katalysator | Kat-Menge pro 5 g PVA mmol | PVA-Konz. in DMF % | Polymerisations- | | 1. Absorptions-Maximum der Reaktionslösung λ/nm | Verstrekkungsgrad % | optometrische Daten für 600 nm | |
|---|---|---|---|---|---|---|---|---|---|
| | | | | Temp. °C | Zeit sec | | | Dichroitisches Verhältnis $Q_E$ | Polarisationsgrad P % |
| 3 | $NiPh(Ph_2PCHCPhO)(Pr^i{}_3PCHPh)$ | 0,25 | 5 | 80 | 15 | 637 | 720 | 21,2 | 99,7 |
| 4 | $NiPh(Ph_2PCHCMeO)(Ph_3PCH_2)$ | 1,0 | 5 | 80 | 15 | 459 | 736 | 8,7 | 99,6 |
| 5 | $NiPh(Ph_2PCHCPhO)(Me_3PCH_2)$ | 0,375 | 7,5 | 65 | 15 | 571 | 790 | 18,7 | 93,2 |
| 6 | $NiPh(Ph_2PCHCPhO)(Me_3PCH_2)$ | 0,25 | 10 | 80 | 600 | | 400 | 9,9 | 92,9 |

Beispiel 7

Eine analog Beispiel 2-6 hergestellte und bei 145° C gereckte Polyvinylalkohol-Polyacetylen-Folie, die als Weichmacher 2 % Glyzerin, bezogen auf Matrix enthielt, welches nach beendeter Polymerisation der Gießlösung zugesetzt worden war, hatte folgende optometrische Daten für Licht der Wellenlänge 600 nm:
Dichroitisches Verhältnis $Q_E$ : 19,5,
Polarisationsgrad P : 99,7 %
wurde wie folgt laminiert:

2 mm dicke Glasplatten wurden einseitig mit einem Polyurethanpolyharnstoff (PU) nach DE 26 44 434, 5 %ig in Methylenchlorid (die Lösung enthielt 10 % UV-Absorber der Formel

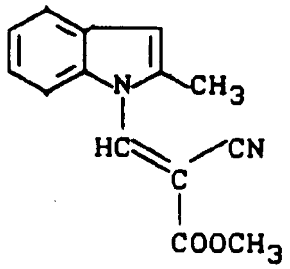

(Bayer UV 340®) bezogen auf PU),
in einer Schichtdicke von 400 μ aufgerakelt und getrocknet. Die oben beschriebene, ca. 12 μ starke Polarisations-Folie wurde zwischen die PU-beschichteten Seiten zweier solcher Glasplatten gelegt und während 5 min bei 150° C einem Druck von 20 bar ausgesetzt. Es resultierte ein Polarisator, der bei Licht der Wellenlänge 600 nm folgende Eigenschaften aufwies:
Dichroitisches Verhältnis $Q_E$ : 19,4
Polarisationsgrad P : 99,6 %

Entsprechende Ergebnisse wurden erhalten, wenn die Kernschicht mit Adhäsionsschichten versehen und anschließend die Deckschichten aufgebracht wurden.

Ebenfalls vergleichbare Ergebnisse wurden erhalten, wenn diese mit PU-Adhäsionsschicht versehene polarisierende Kernschicht, mit siliconisiertem Papier abgedeckt, 1 Woche zwischengelagert und dann erst mit den Deckschichten verklebt wurde.

Beispiel 8

Mit 2 glaslaminierten, PU-verklebten PVA-PAC-Polarisationsfolien wurden jeweils eine 1000stündige Stabilisationsprüfung auf Wärmebeständigkeit bei 100° C und eine auf UV-Beständigkeit durchgeführt.

Die Polarisator-Eigenschaften bei Licht einer Wellenlänge von 600 nm waren anschließend wie folgt:

| | Wärmetest (1000 h, 100° C) | Xenotest (1000 h, UV) |
|---|---|---|
| Dichroitisches Verhältnis $Q_E$: | 18,7 | 19,6 |
| Polarisationsgrad P : | 99,6 % | 99,2 % |

**Patentansprüche**

1. Laminierte Polarisatoren aus einer polarisierenden Kernschicht und ein- oder beidseitigen Adhäsionsschichten, wobei die Kernschicht ein polyacetylenhaltiges Polymerprodukt ist, dessen Matrix ein Polymer mit polaren Gruppen ist, dadurch gekennzeichnet, daß als Adhäsionsschichten thermoplastische Polyurethan-Polyharnstoffe einer überwiegend linearen Molekularstruktur mit ausschließlich aliphatisch oder

cycloaliphatisch gebundenen Urethan- und Harnstoff-Segmenten eingesetzt werden, die sich durch

a) einen Gehalt an Harnstoffgruppen -NH-CO-NH-von 1-20 Gew.-% und

b) einen Gehalt an seitenständigen, unmittelbar mit der Hauptkette des Moleküls verbundenen Carboxylgruppen -COOH von 0,001-10 Gew.-%, alles bezogen auf das Gesamtgewicht der Polyurethan-Polyharnstoffe, auszeichnen.

2. Herstellungsverfahren von laminierten Polarisatoren nach Anspruch 1, wobei die Adhäsionsschichten auf die polarisierende Kernschicht aufgebracht werden und zeitlich getrennt davon, durch Zwischenlagerung und/oder Transport, transparente Deckschichten auf die Adhäsionsschichten durch Schmelzverklebung aufgebracht werden.

3. Laminierte Polarisatoren nach Anspruch 1, gekennzeichnet durch ein- oder beidseitig angebrachte Deckschichten aus mineralischen Gläsern, einem aromatischen Polyester, Polyacrylnitril, Poly(meth)acrylat, Polysulfon, aromatischem Polycarbonat, Celluloseacetat, Celluloseacetobutyrat, Polyamid, Polyhydantoin, Polyimid, Polyamidimid, Polyparaphenylenbenzo-bis-imidazol und oxazole, Polyetherketone, bevorzugt aus einem aromatischen Polyester, Polyacrylat, Polycarbonat, Celluloseester und mineralischen Gläsern.

4. Laminierte Polarisatoren nach Anspruch 1, dadurch gekennzeichnet, daß es sich bei der polarisierenden Kernschicht um eine verstreckte Folie mit einem Verstreckungsgrad $\varepsilon$ von mehr als 200 %, bevorzugt mindestens 500 %, besonders bevorzugt mindestens 600 %, handelt.

5. Laminierte Polarisatoren nach Anspruch 1, deren polarisierende Kernschicht herstellbar ist durch Polymerisation von Acetylen in der Lösung eines Polymeren mit polaren Gruppen in Gegenwart eines Nickel-Katalysators, der erhalten wird durch Umsetzung einer Nickel-(O)-Verbindung oder einer Verbindung, die in situ in eine Nickel-(O)-Verbindung übergeführt werden kann, mit Phosphorverbindungen der Formeln

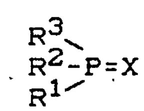

und

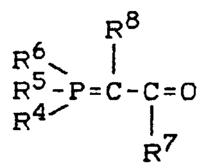

,

worin

$R^1$, $R^2$ und $R^3$ unabhängig voneinander geradkettiges oder verzweigtes $C_1$-$C_{20}$-Alkyl, $C_1$-$C_{20}$-Alkoxy, $C_3$-$C_8$-Cycloalkyl, $C_2$-$C_6$-Alkenyl, $C_6$-$C_{12}$-Aryl, $C_6$-$C_{12}$-Aryloxy, $C_7$-$C_{15}$-Aralkyl oder Di($C_1$-$C_4$-alkyl)-amino,

$R^4$, $R^5$, $R^6$, $R^7$ und $R^8$ unabhängig voneinander geradkettiges oder verzweigtes $C_1$-$C_{20}$-Alkyl, $C_2$-$C_{30}$-Alkenyl, $C_1$-$C_{20}$-Alkoxy, $C_3$-$C_8$-Cycloalkyl, $C_6$-$C_{12}$-Aryl, $C_6$-$C_{12}$-Aryloxy oder $C_7$-$C_{15}$-Aralkyl, bedeuten,

wobei

$R^7$ zusätzlich Wasserstoff und

$R^8$ zusätzlich Wasserstoff oder Acyl bedeuten können und

X doppelt gebundenen Sauerstoff, die Gruppe $NR^9$ oder die Gruppe

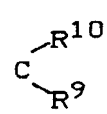

,

bedeutet, wobei

$R^9$ und $R^{10}$ unabhängig voneinander Wasserstoff, Silyl, Acyl, Phenyl, Cyano oder $R^1$ bedeuten.

6. Laminierte Polarisatoren nach Anspruch 5, dadurch gekennzeichnet, daß der Nickel-Katalysator zur Herstellung der polarisierenden Kernschicht durch Umsetzung mit Phosphorverbindungen der Formeln

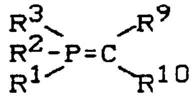 und 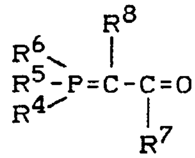

erhalten wird, in denen

| | |
|---|---|
| $R^1$, $R^2$, $R^3$ | unabhängig voneinander geradkettiges oder verzweigtes $C_1$-$C_{20}$-Alkyl, $C_1$-$C_{20}$-Alkoxy, $C_3$-$C_8$-Cycloalkyl, $C_2$-$C_6$-Alkenyl, $C_6$-$C_{12}$-Aryl, $C_6$-$C_{12}$-Aryloxy, $C_7$-$C_{15}$-Aralkyl oder Di($C_1$-$C_4$-alkyl)-amino, |
| $R^4$ | für $C_6$-$C_{12}$-Aryl steht, |
| $R^5$, $R^6$, $R^7$ und $R^8$ | unabhängig voneinander geradkettiges oder verzweigtes $C_1$-$C_{20}$-Alkyl, $C_2$-$C_{30}$-Alkenyl, $C_1$-$C_{20}$-Alkoxy, $C_3$-$C_8$-Cycloalkyl, $C_6$-$C_{12}$-Aryl, $C_6$-$C_{12}$-Aryloxy oder $C_7$-$C_{15}$-Aralkyl bedeuten, wobei $R^7$ zusätzlich Wasserstoff und $R^8$ zusätzlich Wasserstoff oder Acyl bedeuten können und |
| $R^9$ und $R^{10}$ | unabhängig voneinander Wasserstoff, Silyl, Acyl, Phenyl, Cyano oder $R^1$ bedeuten, bevorzugt durch Umsetzung mit Phosphorverbindungen der Formeln |

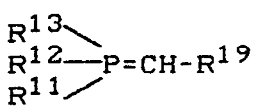 und 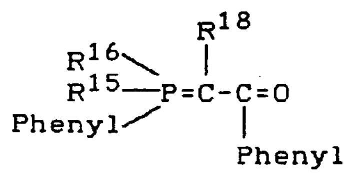

erhalten wird, in denen

| | |
|---|---|
| $R^{11}$, $R^{12}$ und $R^{13}$ | unabhängig voneinander $C_1$-$C_8$-Alkyl, Phenyl oder Benzyl bedeuten und |
| $R^{15}$, $R^{16}$ und $R^{18}$ | unabhängig voneinander $C_1$-$C_8$-Alkyl oder Phenyl bedeuten, wobei |
| $R^{18}$ | zusätzlich Wasserstoff oder Acyl bedeuten kann, und |
| $R^{19}$ | für Wasserstoff, $C_1$-$C_8$-Alkyl oder Phenyl steht, |

besonders bevorzugt durch Umsetzung mit Phosphorverbindungen der Formeln

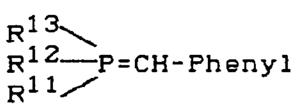 und 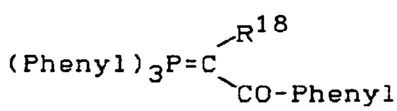

erhalten wird, in denen
$R^{11}$, $R^{12}$, $R^{13}$ und $R^{18}$ die obige Bedeutung haben.

7. Laminierte Polarisatoren nach Anspruch 6, in denen die polarisierende Kernschicht durch Kurzeitpolymerisation erhalten wird.

8. Laminierte Polarisatoren nach Anspruch 7, dadurch gekennzeichnet, daß die Matrix des polyacetylenhaltigen Polymerproduktes ein 70 - 90 % verseiftes Polyvinylacetat ist.

9. Laminierte Polarisatoren nach Anspruch 1, gekennzeichnet durch einen Gehalt an Stabilisatoren in der polarisierenden Kernschicht, in der Adhäsionsschicht oder in der Deckschicht.

## Claims

1. Laminated polarizers consisting of a polarizing core layer and adhesion layers on one or both sides, the

core layer being a polyacetylene-containing polymer product of which the matrix is a polymer containing polar groups, characterized in that the adhesion layers are thermoplastic polyurethane polyureas having a predominantly linear molecular structure with exclusively aliphatically or cycloaliphatically bound urethane and urea segments which are distinguished by

a) a content of urea groups -NH-CO-NH- of 1 to 20% by weight and

b) a content of lateral carboxyl groups -COOH directly attached to the main chain of the molecule of 0.001 to 10% by weight, based on the total weight of the polyurethane polyureas.

2. A process for the production of the laminated polarizers claimed in claim 1, in which the adhesion layers are applied to the polarizing core layer and, in a subsequent step, transparent outer layers are applied to the adhesion layers by bonding in the melt after intermediate storage and/or transport.

3. Laminated polarizers as claimed in claim 1, characterized by outer layers on one or both sides of mineral glasses, an aromatic polyester, polyacrylonitrile, poly(meth)acrylate, polysulfone, aromatic polycarbonate, cellulose acetate, cellulose acetobutyrate, polyamide, polyhydantoin, polyimide, polyamide imide, poly-p-phenylenebenzo-bis-imidazole and oxazoles, polyether ketones, preferably of an aromatic polyester, polyacrylate, polycarbonate, cellulose ester and mineral glasses.

4. Laminated polarizers as claimed in claim 1, characterized in that the polarizing core layer is a stretched film having a degree of stretching $\varepsilon$ of more than 200%, preferably of at least 500% and, more preferably, of at least 600%.

5. Laminated polarizers as claimed in claim 1 of which the polarizing core layer is obtainable by polymerization of acetylene in a solution of a polymer bearing polar groups in the presence of a nickel catalyst which is obtained by reaction of a nickel-(O) compound or a compound convertible in situ into a nickel-(O) compound with phosphorus compounds corresponding to the following formulae:

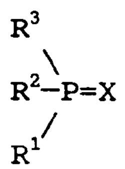

and

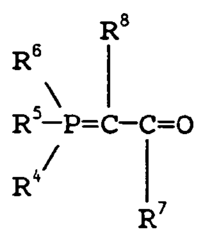

in which

$R^1$, $R^2$ and $R^3$ independently of one another represent linear or branched $C_{1-20}$ alkyl, $C_{1-20}$ alkoxy, $C_{3-8}$ cycloalkyl, $C_{2-6}$ alkenyl, $C_{6-12}$ aryl, $C_{6-12}$ aryloxy, $C_{7-15}$ aralkyl or di-($C_{1-4}$-alkyl)-amino,

$R^4$, $R^5$, $R^6$, $R^7$ and $R^8$ independently of one another represent linear or branched $C_{1-20}$ alkyl, $C_{2-30}$ alkenyl, $C_{1-20}$ alkoxy, $C_{3-8}$ cycloalkyl, $C_{6-12}$ aryl, $C_{6-12}$ aryloxy or $C_{7-15}$ aralkyl, in addition to which
$R^7$ may be hydrogen and
$R^8$ may be hydrogen or acyl, and

X represents double-bonded oxygen, the group $NR^9$ or the group

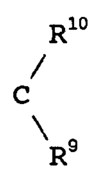

where $R^9$ and $R^{10}$ independently of one another represent hydrogen, silyl, acyl, phenyl, cyano or have the same meaning as $R^1$.

6. Laminated polarizers as claimed in claim 5, characterized in that the nickel catalyst used in the production

of the polarizing core layer is obtained by reaction with phosphorus compounds corresponding to the following formulae:

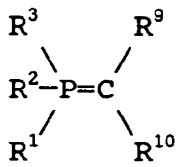

and

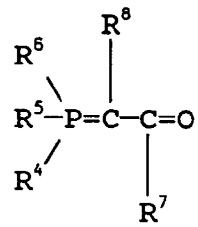

in which

| | |
|---|---|
| $R^1$, $R^2$ and $R^3$ | independently of one another represent linear or branched $C_{1-20}$ alkyl, $C_{1-20}$ alkoxy, $C_{3-8}$ cycloalkyl, $C_{2-6}$ alkenyl, $C_{6-12}$ aryl, $C_{6-12}$ aryloxy, $C_{7-15}$ aralkyl or di-($C_{1-4}$-alkyl)-amino, |
| $R^4$ | is $C_{6-12}$ aryl, |
| $R^5$, $R^6$, $R^7$ and $R^8$ | independently of one another represent linear or branched $C_{1-20}$ alkyl, $C_{2-30}$ alkenyl, $C_{1-20}$ alkoxy, $C_{3-8}$ cycloalkyl, $C_{6-12}$ aryl, $C_{6-12}$ aryloxy or $C_{7-15}$ aralkyl, in addition to which $R^7$ may be hydrogen and $R^8$ may be hydrogen or acyl, and |
| $R^9$ and $R^{10}$ | independently of one another represent hydrogen, silyl, acyl, phenyl, cyano or have the same meaning as $R^1$, |

preferably by reaction with phosphorus compounds corresponding to the following formulae:

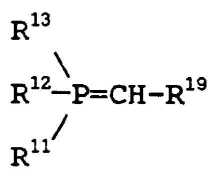

and

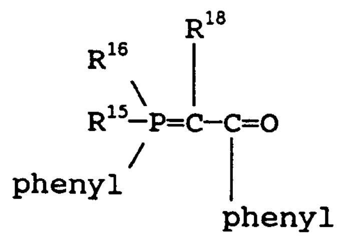

in which

| | |
|---|---|
| $R^{11}$, $R^{12}$ and $R^{13}$ | independently of one another represent $C_{1-8}$ alkyl, phenyl or benzyl and |
| $R^{15}$, $R^{16}$ and $R^{18}$ | independently of one another represent $C_{1-8}$ alkyl or phenyl, in addition to which |
| $R^{18}$ | may be hydrogen or acyl and |
| $R^{19}$ | is hydrogen, $C_{1-8}$ alkyl or phenyl, |

more preferably by reaction with phosphorus compounds corresponding to the following formulae:

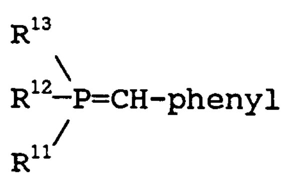

and

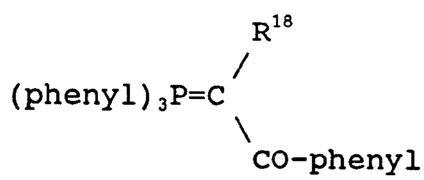

in which

$R^{11}$, $R^{12}$, $R^{13}$ and $R^{18}$ are as defined above.

7. Laminated polarizers as claimed in claim 6, in which the polarizing core layer is obtained by accelerated

polymerization.

8. Laminated polarizers as claimed in claim 7, characterized in that the matrix of the polyacetylene-containing product is a 70 to 90% saponified polyvinyl acetate.

9. Laminated polarizers as claimed in claim 1, characterized by a content of stabilizers in the polarizing core layer, in the adhesion layer or in the outer layer.

## Revendications

1. Polariseurs stratifiés formés d'une couche centrale polarisante et de couches d'adhérence appliquées sur une face ou sur les deux faces, la couche centrale étant un produit polymère contenant du polyacétylène, dont la matrice est un polymère avec des groupes polaires, caractérisés en ce que l'on utilise, comme couches d'adhérence, des polyuréthannes-polyurées thermoplastiques ayant une structure moléculaire principalement linéaire, avec des segments d'uréthanne et d'urée exclusivement liés à des restes aliphatiques ou cycloaliphatiques, qui se caractérisent par:
a) une teneur en groupes urée -NH-CO-NH- comprise entre 1 et 20% en poids; et
b) une teneur en groupes carboxyle -COOH liés latéralement directement à la chaîne principale de la molécule, comprise entre 0,001 et 10% en poids, tous ces pourcentages étant rapportés au poids total du polyuréthanne-polyurée.

2. Procédé de fabrication de polariseurs stratifiés selon la revendication 1, dans lequel les couches d'adhérence sont appliquées sur la couche centrale polarisante et que les couches de recouvrement transparentes sont appliquées sur les couches d'adhérence par collage à l'état fondu au cours d'une opération séparée de la première dans le temps par un entreposage intermédiaire et/ou un transport.

3. Polariseurs stratifiés selon la revendication 1, caractérisés par des couches de recouvrement appliquées sur une face ou sur les deux faces, formés de verre minéraux, d'un polyester aromatique, de polyacrylonitrile, de poly(méth)acrylate, de polysulfone, de polycarbonate aromatique, d'acétate de cellulose, d'acétobutyrate de cellulose, de polyamide, de polyhydantoïne, de polyimide, de polyamidimide, de polyparaphénylènebenzo-bis-imidazole et -oxazole, de polyéthercétone et, de préférence, d'un polyester aromatique de polyacrylate, de polycarbonate, d'ester cellulosique et de verres minéraux.

4. Polariseurs stratifiés selon la revendication 1, caractérisés en ce que la couche centrale polarisante est une feuille mince étirée ayant un degré d'étirement ε supérieur à 200% et, de préférence, d'au moins 500% et, plus particulièrement encore, d'au moins 600%.

5. Polariseurs stratifiés selon la revendication 1, dont la couche centrale polarisante peut être préparée par polymérisation d'acétylène dans la solution d'un polymère avec des groupes polaires en présence d'un catalyseur au nickel, qui est obtenu en faisant réagir un composé de nickel-(O) ou un composé qui peut être transformé in situ en un composé de nickel-(O) avec des composés phosphorés de formule

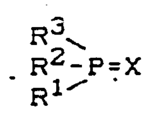

et

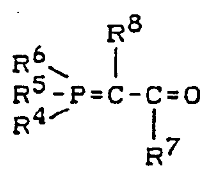

dans laquelle
$R^1$, $R^2$ et $R^3$ représentent, indépendamment les uns des autres, des radicaux alkyle en $C_1$-$C_{20}$, linéaires ou ramifiés, alcoxy en $C_1$-$C_{20}$, cycloalkyle en $C_3$-$C_8$, alcényle en $C_2$-$C_6$, aryle en $C_6$-$C_{12}$, aryloxy en $C_6$-$C_{12}$, aralkyle en $C_7$-$C_{15}$ ou di($C_1$-$C_4$-alkyl)-amino;
$R^4$, $R^5$, $R^6$, $R^7$ et $R^8$ représentent, indépendamment les uns des autres, des radicaux alkyle en $C_1$-$C_{20}$, linaires ou ramifiés, alcényle en $C_2$-$C_{30}$, alcoxy en $C_1$-$C_{20}$, cycloalkyle en $C_3$-$C_8$, aryle en $C_6$-$C_{12}$, aryloxy en $C_6$-$C_{12}$ ou aralkyle en $C_7$-$C_{15}$ dans laquelle
$R^7$ peut représenter, en outre, de l'hydrogène et

$R^8$ peut représenter, en outre, de l'hydrogène et un radical acyle et X représente de l'oxygène à double liaison, le groupe $NR^9$ ou le groupe

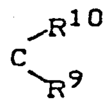,

avec
$R^9$ et $R^{10}$ représentant, indépendamment l'un de l'autre, de l'hydrogène, un radical silyle, acyle, phényle, cyano ou $R^1$.

6. Polariseurs stratifiés selon la revendication 5, caractérisés en ce que le catalyseur au nickel utilisé pour la préparation de la couche centrale polarisante est obtenu en faisant réagir des composés phosphorés de formule

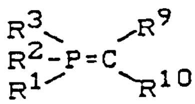 et 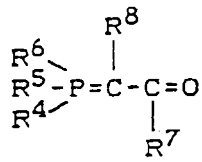

dans lesquelles
$R^1$, $R^2$ et $R^3$ représentent, indépendamment les uns des autres, des radicaux alkyle en $C_1$-$C_{20}$, linéaires ou ramifiés, alcoxy en $C_1$-$C_{20}$, cycloalkyle en $C_3$-$C_8$, alcényle en $C_2$-$C_6$, aryle en $C_6$-$C_{12}$, aryloxy en $C_6$-$C_{12}$, aralkyle en $C_7$-$C_{15}$ ou di($C_1$-$C_4$-alkyl)-amino;
$R^4$ représente un radical aryle en $C_6$-$C_{12}$;
$R^5$, $R^6$, $R^7$ et $R^8$ représentent, indépendamment les uns des autres, des radicaux alkyle en $C_1$-$C_{20}$, linaires ou ramifiés, alcényle en $C_2$-$C_{30}$, alcoxy en $C_1$-$C_{20}$, cycloalkyle en $C_3$-$C_8$, aryle en $C_6$-$C_{12}$, aryloxy en $C_6$-$C_{12}$ ou aralkyle en $C_7$-$C_{15}$ dans laquelle
$R^7$ peut représenter, en outre, de l'hydrogène et
$R^8$ peut représenter, en outre, de l'hydrogène et un radical acyle et
$R^9$ et $R^{10}$ représentent, indépendamment l'un de l'autre, de l'hydrogène, un radical silyle, acyle, phényle, cyano ou $R^1$, de préférence, avec des composés phosphorés de formules

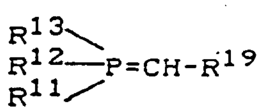 et 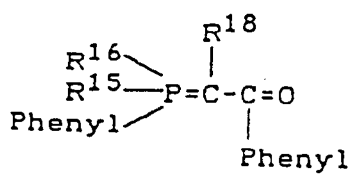

dans lesquelles
$R^{11}$, $R^{12}$ et $R^{13}$ représentent, indépendamment les uns des autres, un alkyle en $C_1$-$C_8$, un phényle ou un benzyle,
$R^{15}$, $R^{16}$ et $R^{18}$ représentent, indépendamment les uns des autres, un alkyle en $C_1$-$C_8$ ou un phényle, avec $R^{18}$ qui peut représenter en outre de l'hydrogène ou un radical acyle, et
$R^{19}$ qui représente de l'hydrogène, un alkyle en $C_1$-$C_8$ ou un phényle,
tout particulièrement en faisant réagir avec des composés phosphorés de formules

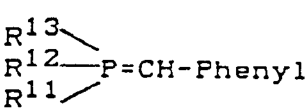 et 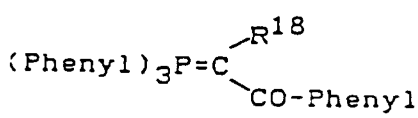

dans lesquelles $R^{11}$, $R^{12}$, $R^{13}$ ont les significations précitées.

7. Polariseurs stratifiés selon la revendication 6, dans lesquels la couche centrale polarisante est obtenue par une polarisation de courte durée.

8. Polariseurs stratifiés selon la revendication 7, caractérisés en ce que la matrice du produit polymère contenant du polyacétylène est un poly(acétate de vinyle) saponifié à 70-90%.

9. Polariseurs stratifiés selon la revendication 1, caractérisés par une teneur en stabilisant dans la couche centrale polarisante, dans la couche d'adhérence ou dans la couche de recouvrement.